# EUROPEAN PATENT APPLICATION

(11) **EP 4 091 695 A1**
(43) Date of publication of application: **23.11.2022**
(21) Application number: 22174088.9
(22) Date of filing: 18.05.2022
(51) Int. Cl.: B01D 35/30

(54) **DEVICE FOR TREATING WATER IN A HYDRAULIC SYSTEM**

(30) Priority: 20.05.2021 IT 202100013037
(71) Applicant: ACQUA BREVETTI S.R.L., 35035 Mestrino (PD) (IT)
(72) Inventor: BARBIERI, Graziano, 35035 MESTRINO PD (IT)
(74) Representative: Modiano, Micaela Nadia

(57) **Abstract**

A device (10) for treating water in a hydraulic system, comprising a filter (11) and a connector (12) for fluidic connection to the hydraulic system, the connector (12) being fixed hermetically to the filter (11) by means of a coupling (13) with flanges (14, 15) comprising two flanges:
- a first flange (14), which extends from the filter (11),
- a second flange (15), which extends from the connector (12) and corresponds and is opposite to the first flange (14),
the first flange (14) engaging the second flange (15) so as to allow a free rotation of the filter (11) with respect to the connector (12) about an axis that is perpendicular to a plane of arrangement of the flanges (14, 15).

The device (10) comprises at least one leaf spring (18) in the interface region between the first flange (14) and the second flange (15), the leaf spring (18) being inserted in a seat (27) on one of the flanges (14, 15) and having a protrusion (28) engaging in a corresponding slot (29) on the other one of the flanges (14, 15).

## Description

The present invention relates to a device for treating water in a hydraulic system.

A device for treating water in a hydraulic system usually comprises a filter and a connector for the connection of the filter to the hydraulic system.

In particular, the connector is usually T-shaped and comprises an inlet and an outlet for fluidic connection to the hydraulic system.

Generally, the connector and the filter are separate elements which are joined hermetically by means of a flanged connection, with a first flange on the connector and a second flange on the filter, which constitutes a complementary flange for the first flange.

Since not all hydraulic systems are the same and it is not always possible to know beforehand the arrangement of the ducts to which the inlet and outlet of the connector must be connected, devices with a flanged coupling between the connector and the filter are known which allow a mutual rotation of the filter on the connector, about an axis perpendicular to the plane of arrangement of the flanges, so as to allow any inclination of the filter with respect to the axis of extension of the ducts of the hydraulic system.

The connector and the filter are then mutually fixed by using screws for locking the two flanges.

To lock mutual rotation between the filter and the connector, and to allow the filter to maintain the predetermined orientation, it is known to use an annular spring arranged in an annular space between annular surfaces of the two flanges, in the interface region between them, so as to stably fix the orientation of the filter with respect to that of the connector.

This background art has drawbacks.

In fact, the annular spring has a contoured region, complementary to a complementarily shaped region of the filter flange, so that it can be kept in position before making the connector face the filter.

This results in the need to arrange said spring only with a predetermined orientation, causing a long and awkward process for the assembly of the device.

Moreover, the annular spring causes significant space occupation that must be taken into account for the passage of the locking screws between the two flanges.

The aim of the present invention is to provide a device for treating water in a hydraulic system that is capable of improving the background art in one or more of the aspects cited above.

Within this aim, an object of the invention is to provide a device for treating water in a hydraulic system that allows easier and quicker assembly than similar devices of the known type.

Another object of the invention is to provide a device for treating water in a hydraulic system that makes it possible to lock the mutual rotation between the filter and the connector with a solution that is easier to provide and apply than the background art.

A further object of the present invention is to overcome the drawbacks of the background art in a manner that is alternative to any existing solutions.

Not the least object of the invention is to provide a device for treating water in a hydraulic system that is highly reliable, relatively easy to provide and at competitive costs.

This aim and these and other objects which will become more apparent hereinafter are achieved by a device for treating water in a hydraulic system, comprising a filter and a connector for fluidic connection to said hydraulic system, said connector being fixed hermetically to said filter by means of a coupling with flanges comprising two flanges:
- a first flange, which extends from said filter,
- a second flange, which extends from said connector and corresponds and is opposite to said first flange,

said first flange engaging said second flange so as to allow a free rotation of said filter with respect to said connector about an axis that is perpendicular to a plane of arrangement of said flanges,
said device being characterized in that it comprises at least one leaf spring in an interface region between said first flange and said second flange, said leaf spring being inserted in a seat on one of said flanges and having a protrusion engaged in a corresponding slot on the other one of said flanges.

Further characteristics and advantages of the invention will become more apparent from the description of a preferred but not exclusive embodiment of the device for treating water in a hydraulic system according to the invention, illustrated by way of non-limiting example in the accompanying drawings, wherein:

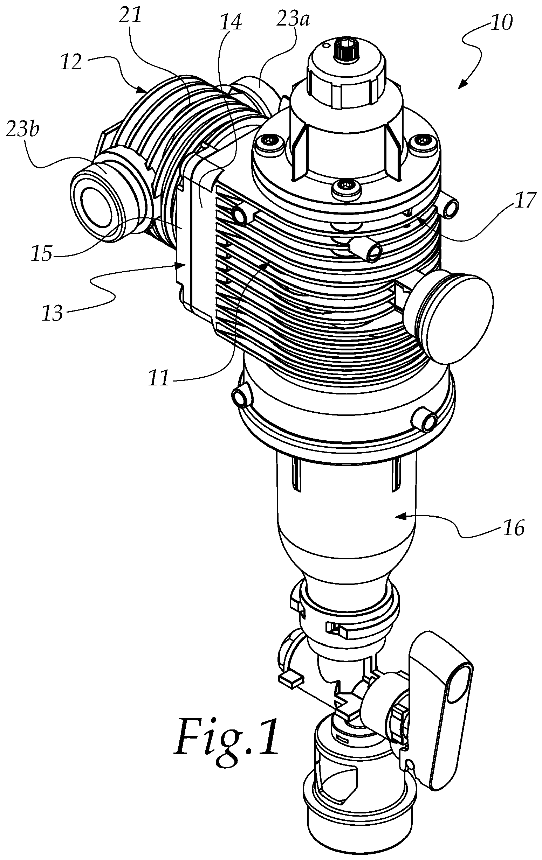

Figure 1 is a perspective view of a device for treating water in a hydraulic system, according to the invention;
Figure 2 is an enlarged-scale sectional view of a portion of the device of Figure 1;
Figure 3 is a general perspective view of a first component of the device of Figure 1;
Figure 4 is an exploded view of a portion of the device of Figure 1;
Figure 5 is a general perspective view of a second component of the device of Figure 1;
Figure 6 is a general perspective view of a third component of the device of Figure 1.

With reference to the figures, a device for treating water in a hydraulic system, according to the invention, is generally designated by the reference numeral 10.

The device 10 comprises: a filter 11 and a connector 12 for fluidic connection to a hydraulic system, not shown in the figures.

The connector 12 is fixed hermetically to the filter 11 by means of a coupling 13 with flanges 14, 15 comprising two flanges:
- a first flange 14, which extends from the filter 11,
- a second flange 15, which extends from the connector 12 and corresponds and is opposite to the first flange 14.

In particular, the first flange 14 engages the second flange 15 so as to allow a free rotation of the filter 11 with respect to the connector 12 about an axis that is perpendicular to the plane of arrangement of the flanges 14 and 15.

In detail, the filter 11, having a substantially cylindrical extension, comprises a vessel 16 which contains a filtering cartridge, which is screwed to a head 17 with an axis of extension that coincides with the axis of extension of the vessel 16.

Such head 17 includes, on one side, the first flange 14 lying in a plane that is parallel to the axis of extension of the head 17.

One of the particularities of the device 10 is that it comprises two or more leaf springs 18 in an interface region between the first flange 14 and said second flange 15.

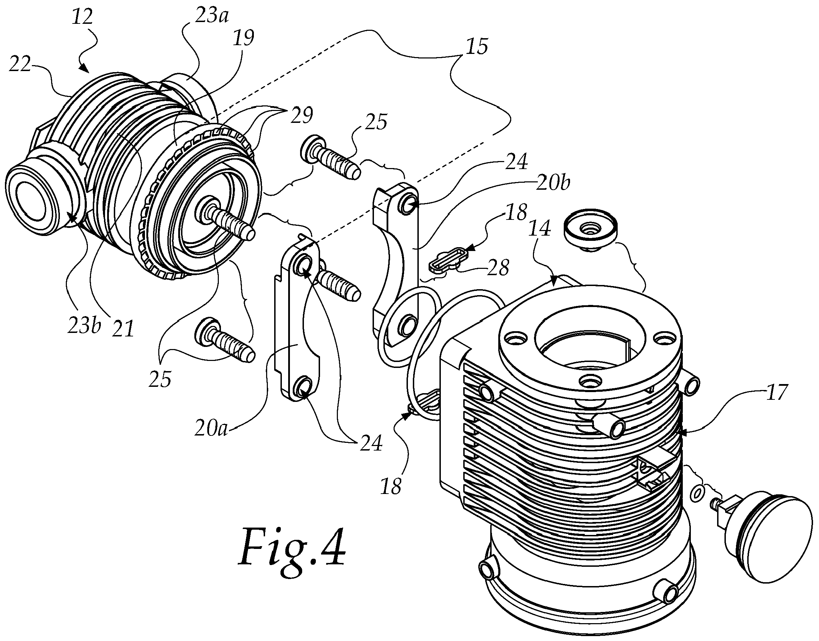

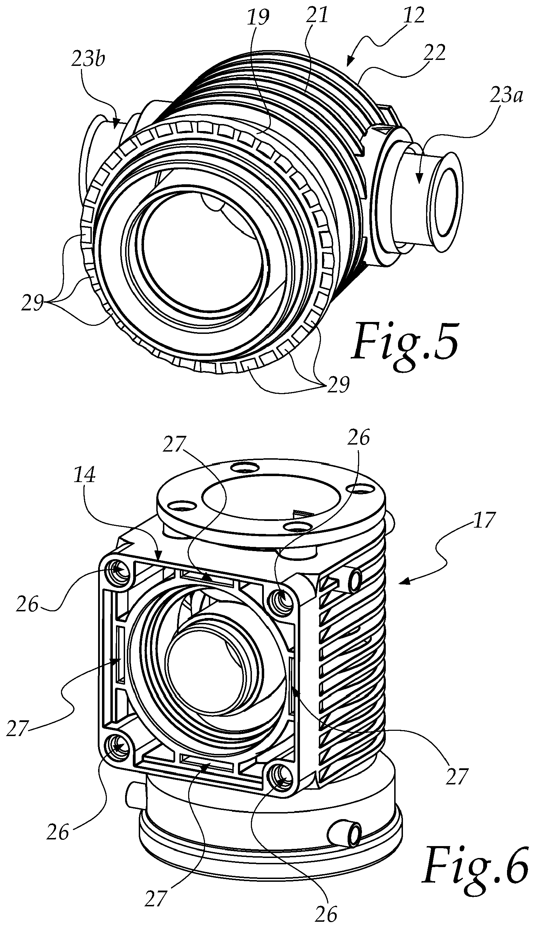

With reference to Figures 4 and 5, the connector 12 comprises a substantially tubular body 21 with:
- a first annular end 19, which is wider than the body 21 and is connected to the head 17,
- a second end 22, which has an inlet 23a and an outlet 23b, for connection to an output duct and to an intake duct of the hydraulic system, not shown in the figures.

In particular, the second flange 15 is constituted by:
- the first annular end 19 of the body 21 of the connector 12,
- two opposite and mirror-symmetrical substantially semi-annular/arc-like elements 20a, 20b, which are shaped complementarily to the body 21 of the connector 12 and are clamped thereto adjacent to the first end 19.

Such two substantially semi-annular/arc-like elements 20a, 20b each have two or more through holes 24 for the insertion of screws 25 for the fixing of the second flange 15 to the first flange 14.

The first flange 14 has a plurality of dead holes 26, each of which corresponds to one of the through holes 24 of the elements 20a, 20b of the second flange 15.

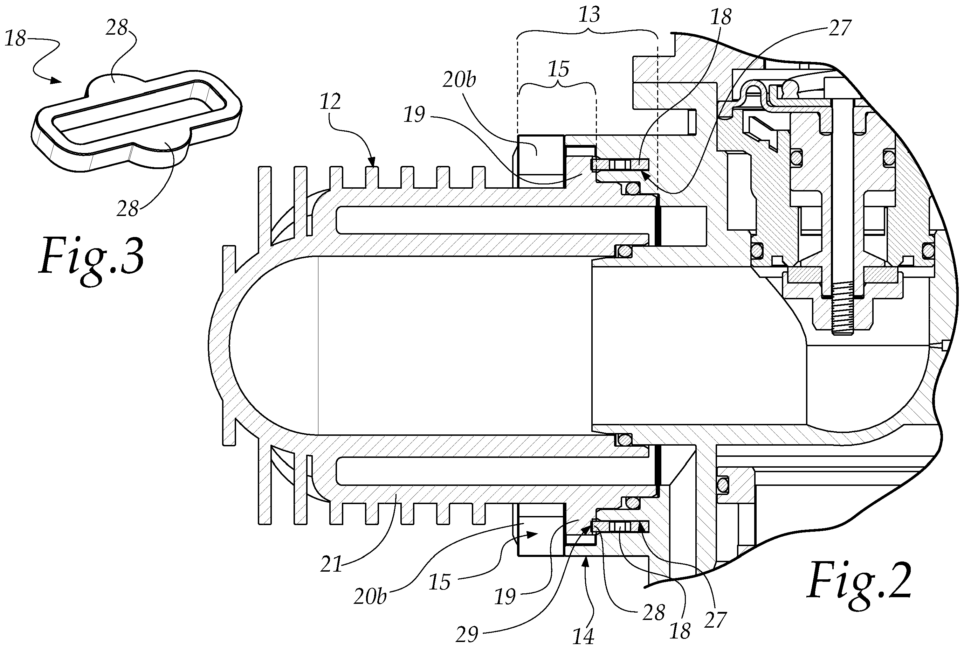

Specifically, with particular reference to Figure 2, the two substantially semi-annular/arc-like elements 20a, 20b are fixed to the first flange 14, by means of the screws 25, clamping/interlocking the first end 19 of the body 21 of the connector 12 between them and the first flange 14.

The first flange 14 is shaped complementarily/complementary to the first end 19 of the body 21 of the connector 12 and to the two substantially semi-annular/arc-like elements 20a, 20b.

The first end 19 of the body 21 of the connector 12 has such a shape and dimensions as to be contained within the space occupation of the first flange 14.

The first flange 14 has a substantially square profile, with the dead holes 26 at the corners of the square.

The leaf springs 18 are inserted in a corresponding seat 27 of the first flange 14.

In the example shown in the figures, the first flange 14 is provided with four seats 27 for the insertion of one of the leaf springs 18, each seat 27 being located at one of the sides of the square representing the profile of the first flange 14, substantially in a central position, so as to not affect the positions of the dead holes 26.

Advantageously, the device 10 has at least two springs 18 inserted in two opposite seats 27 of the first flange 14.

Each leaf spring 18 has at least one protrusion 28 engaged in a corresponding slot 29 provided in the surface of the first end 19 of the body 21 of the connector 12 that is directed toward the head 17.

A shape mating is produced between the protrusion 28 of the leaf spring 18 and the corresponding slot 29.

Specifically, the surface of the first end 19 of the body 21 of the connector 12, which is directed toward the head 17, has a plurality of slots 29 which are extended substantially radially and mutually side-by-side.

Advantageously, each leaf spring 18 has two opposite protrusions 28, so as to make it easier and quicker to assemble the device 10, since it does not have a preferred orientation for insertion in the seat 27.

Use of the device 10 according to the invention is as follows.

The second flange 15, constituted by the first annular end 19 of the body 21 of the connector 12 and by the two elements 20a, 20b, which are shaped complementarily to the body 21, allows the rotation of the body 21 of the connector 12 with respect to the two elements 20a, 20b, about the axis of extension of the body 21, which is perpendicular to the plane of arrangement of the flanges 14 and 15, even when the connector 12 is fixed to the head 17.

Due to the elasticity of the leaf springs 18, which are inserted in the seats 27, during the rotation of the body 21 of the connector 12, with respect to the head 17, the protrusions 28 retract with respect to the corresponding slot 29, and optionally to a plurality of subsequent slots 29, with a snap action for each one of them, allowing rotation, to then engage in a new slot 29 when rotation ends.

This determines the possibility to maintain a stable configuration between the filter 11 and the connector 12, since it is necessary to use an external force to disengage the protrusions 28 of the leaf springs 18 with respect to the corresponding slots 29.

In practice it has been found that the invention achieves the intended aim and objects, providing a device for treating water in a hydraulic system that allows an easier and quicker assembly than similar devices of the known type.

Furthermore, the invention provides a device for treating water in a hydraulic system that makes it possible to lock the mutual rotation between the filter and the connector with a solution that is easier to provide and apply than the background art.

The invention thus conceived is susceptible of numerous modifications and variations, all of which are within the scope of the appended claims; all the details may furthermore be replaced with other technically equivalent elements.

In practice, the materials used, as long as they are compatible with the specific use, as well as the contingent shapes and dimensions, may be any according to the requirements and the state of the art.

The disclosures in Italian Patent Application No. 102021000013037 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10) for treating water in a hydraulic system, comprising a filter (11) and a connector (12) for fluidic connection to said hydraulic system, said connector (12) being fixed hermetically to said filter (11) by means of a coupling (13) with flanges (14, 15) comprising two flanges:
- a first flange (14), which extends from said filter (11),
- a second flange (15), which extends from said connector (12) and corresponds and is opposite to said first flange (14),
said first flange (14) engaging said second flange (15) so as to allow a free rotation of said filter (11) with respect to said connector (12) about an axis that is perpendicular to a plane of arrangement of said flanges (14, 15),
said device (10) being **characterized in that** it comprises a leaf spring (18) in an interface region between said first flange (14) and said second flange (15), said leaf spring (18) being inserted in a seat (27) on one of said flanges (14, 15) and having a protrusion (28) engaging in a corresponding slot (29) onthe other one of said flanges (14, 15).

2. The device (10) according to claim 1, **characterized in that** said filter (11) has a substantially cylindrical extension and comprises a vessel (16) which contains a filtering cartridge, which is screwed to a head (17) with an axis of extension that coincides with the axis of extension of said vessel (16), said head (17) comprising, on one side, said first flange (14) which lies on a plane that is parallel to the axis of extension of said head (17).

3. The device (10) according to claim 1, **characterized in that** said connector (12) comprises a substantially tubular body (21) with:
- a first annular end (19), which is wider than said body (21) and is connected to said head (17),
- a second end (22), which has an inlet (23a) and an outlet (23b).

4. The device (10) according to one or more of the preceding claims, **characterized in that** said second flange (15) is constituted by:
- said first annular end (19) of said body (21) of said connector (12),
- two opposite and mirror-symmetrical substantially semi-annular/arc-like elements (20a, 20b) which are shaped complementarily to said body (21) of said connector (12) and are clamped thereto adjacent to said first end (19).

5. The device (10) according to one or more of the preceding claims, **characterized in that** said two substantially semi-annular/arc-like elements (20a, 20b) each have two or more through holes (24) for the insertion of screws (25) for the fixing of said second flange (15) to said first flange (14), said first flange (14) having a plurality of dead holes (26), each of which corresponds to one of said through holes (24) of said two elements (20a, 20b) of said second flange (15).

6. The device (10) according to one or more of the preceding claims, **characterized in that** said two substantially semi-annular/arc-like elements (20a, 20b) are fixed to said first flange (14) by means of said screws (25) by clamping/interlocking said first end (19) of said body (21) of said connector (12) between them and said first flange (14), said first flange (14) being shaped complementarily/complementary to said first end (19) of said body (21) of said connector (12) and to said two substantially semi-annular/arclike elements (20a, 20b).

7. The device (10) according to one or more of the preceding claims, **characterized in that** said first end (19) of said body (21) of said connector (12) has such a shape and dimensions that it is contained within the space occupation of said first flange (14).

8. The device (10) according to one or more of the preceding claims, **characterized in that** said first flange (14) has a substantially square profile, with said dead holes (26) at the corners of said square.

9. The device (10) according to one or more of the preceding claims, **characterized in that** said at least one leaf spring (18) is inserted in a corresponding seat (27) of said first flange (14).

10. The device (10) according to one or more of the preceding claims, **characterized in that** said first flange (14) is provided with four seats (27) for the insertion of said leaf spring (18), each one of said seats (27) being located at one of the sides of said square substantially in a central position.

11. The device (10) according to one or more of the preceding claims, **characterized in that** said leaf spring (18) has at least one protrusion (28) engaging in a corresponding slot (29) provided on the surface of said first end (19) of said body (21), of said connector (12), that is directed toward said head (17).

12. The device (10) according to one or more of the preceding claims, **characterized in that** said surface of said first end (19) of said body (21), of said connector (12), that is directed toward said head (17) has a plurality of slots (29) which are substantially extended radially and mutually side-by-side.

13. The device (10) according to one or more of the preceding claims, **characterized in that** said leaf spring (18) has two opposite protrusions (28).
